# EUROPÄISCHE PATENTSCHRIFT

(11) **EP 1 791 415 B1**
(45) Veröffentlichungstag und Bekanntmachung des Hinweises auf die Patenterteilung: **25.06.2008**
(21) Anmeldenummer: 05788560.0
(22) Anmeldetag: 07.09.2005
(51) Int. Cl.: A01D 34/81

(54) **HANDGEFÜHRTER RASENMÄHER**
MANUAL LAWN MOWER
TONDEUSE MANUELLE

(30) Priorität: 07.09.2004 DE 202004014046 U; 25.11.2004 DE 102004057043
(43) Veröffentlichungstag der Anmeldung: 06.06.2007
(73) Patentinhaber: AL-KO KOBER AG, D-89359 Kötz (DE)
(72) Erfinder: BUCHMILLER, Wolfgang, 89312 Günzburg (DE); DE FILIPPO, Antonio, 73342 Bad Dietzenbach (DE); KOBER, Kurt, 89359 Kötz (DE); LIPPL, Wilhelm, 89335 Ichenhausen-Oxenbronn (DE); MUNKENAST, Gert, 89346 Bibertal (DE)
(74) Vertreter: Binder, Armin
(86) Internationale Anmeldenummer: PCT/EP2005/009591
(87) Internationale Veröffentlichungsnummer: WO 2006/027218

(56) Entgegenhaltungen:
- WO-A-00/56137
- DE-U1- 20 304 862
- US-A- 3 411 276
- US-A- 5 402 628
- US-A1- 2002 148 211

## Beschreibung

Die Erfindung betrifft einen handgeführten Rasenmäher gemäß den Oberbegriff des Anspruchs 1.

Ein ähnlicher handgeführter Rasenmäher ist aus der DE 203 04 862 U1 bekannt. Dieser Rasenmäher besteht aus zwei Baugruppen. Die erste Baugruppe umfasst den Mäherkasten mit den Hinterrädern, der Führungseinrichtung und den Fangkorb. Die zweite Baugruppe umfasst den Auflieger mit Vorderrädern, Schutzbügel und Motor. Beide Baugruppen sind drehbar miteinander verbunden. Durch seitliches Drücken der Führungseinrichtung bei gelöstem Arretierungsbolzen werden die beiden Baugruppen gegeneinander verschwenkt und der Rasenmäher kann dadurch gelenkt werden. Das Mähwerk des Rasenmähers erreicht dabei auch kleinere Buchten einer Rasenfläche und ist kompakt gebaut.

Dadurch, dass die Führungseinrichtung, mit der der Rasenmäher von der Bedienperson geführt wird, an der hinteren Baugruppe angebunden ist, ist ein hoher Kraftaufwand zum Lenken des Rasenmähers notwendig. Auch ist es mitunter schwierig den Rasenmäher präzise zu lenken.

Es ist Aufgabe der Erfindung, einen lenkbaren Rasenmäher zur Verfügung zu stellen, der mit geringerem manuellen Kraftaufwand und präziser gelenkt werden kann und trotzdem eine kompakte Bauweise aufweist.

Die Aufgabe der Erfindung wird durch einen Rasenmäher mit den Merkmalen des Anspruches 1 gelöst. Vorteilhafte Weiterbildungen der Erfindung sind Gegenstand untergeordneter Schutzansprüche.

### Die Erfinder haben folgendes erkannt:

Eine präzise Lenkung lässt sich erreichen, wenn die vom Bediener eingeleiteten Lenkbewegungen mit den Schwenkbewegungen der beiden Baugruppen gekoppelt werden. Dreht der Bediener die Führungseinrichtung oder eine Lenkvorrichtung um einen bestimmten Winkel und leitet damit ein gut definiertes Drehmoment in die schwenkbare Verbindung der beiden Baugruppen ein, so führt dies zu einem präzisen Verschwenken der beiden Baugruppen um einen entsprechenden Wert. Der Rasenmäher fährt dann einen bestimmten Radius ab. Dadurch ist es möglich, gewundene Rasenbegrenzungen exakt abzufahren und von Rasen umgebene Baum- oder Strauchinseln mühelos mit einem eingestellten Radius zu umfahren.

Gemäß einer anderen Ausführung kann die Lenkung auch durch eine an der Führungseinrichtung angebrachte Lenkvorrichtung geschehen, wobei die Lenkbewegungen der Lenkvorrichtung über Bowdenzüge, Seilzüge, Gestänge, Kardanwelle oder Hydraulikleitungen an das Schwenklager zwischen den Baugruppen weitergeleitet werden kann.

Demgemäß schlagen die Erfinder vor, den an sich bekannten handgeführten Rasenmäher, mit einer ersten und einer zweiten Baugruppe, die zum Lenken des Rasenmähers gegeneinander um eine aufrecht, vorzugsweise senkrecht, stehende Schwenkachse schwenkbar gelagert sind, einem Motor mit einer Antriebswelle, mindestens einem, jeweils um eine vertikale Achse rotierenden, Schneidwerkzeug, welches durch die Antriebswelle mittelbar oder unmittelbar angetrieben wird, und einer Handführungsvorrichtung zur Führung des Rasenmähers durch eine Person, die an der ersten Baugruppe angebracht ist, wobei die zweite Baugruppe mindestens zwei Räder aufweist, deren Radachsen relativ zur jeweiligen Baugruppe fixiert sind, in der ersten Baugruppe das Schneidwerkzeug integriert und - von oben gesehen - im Rotationsbereich des Schneidwerkzeuges die Schwenklagerung für die zweite Baugruppe angeordnet ist, und die zweite Baugruppe einen Auflieger besitzt, der mit den Rädern der zweiten Baugruppe um den Rotationsbereich des Schneidwerkzeuges schwenkt, dahingehend zu verbessern, dass Lenkmittel vorgesehen sind, welche durch eine Relativbewegung zumindest zwischen Teilen der Handführungsvorrichtung und der ersten Baugruppe ein Drehmoment zwischen der ersten und der zweiten Baugruppe um die Schwenkachse erzeugen.

Die Führungseinrichtung kann als Lenkstange ausgeführt und über ein Lenkgetriebe mit der vorderen Baugruppe verbunden sein. Vorzugsweise ist an der Lenkstange, an deren oberen, dem Bediener zugewandten Ende eine Lenkvorrichtung, beispielsweise ein Lenkrad, angebracht.

Besonders günstig ist es, wenn bei dieser kompakten Bauweise das Lenkgetriebe und die Schwenklagerung funktional miteinander kombiniert wird. Hierzu kann das Lenkgetriebe und die Schwenklagerung die folgenden Bauteile aufweisen:- einen ersten Lagerungsring, der zumindest über ein Kreissegment eine Verzahnung besitzt und mit der zweiten Baugruppe verbunden ist,
- einen zweiten Lagerungsring mit einer Verzahnung der konzentrisch zum ersten Lagerungsring angeordnet ist und mit der ersten Baugruppe verbunden ist,
- ein zwischen beiden Verzahnungen angeordnetes und in diese Verzahnungen eingreifendes Zahnrad, das auf einer Achse gelagert ist, die senkrecht auf einem rotierbaren Zwischenring befestigt ist.

Auf diese Weise kann der Zwischenring von einem Lenkgestänge angesteuert werden, so dass eine Drehung des Zwischenrings in Verbindung mit der Kopplung der Verzahnungen über das Zahnrad eine präzise beeinflussbare Schwenkbewegung zwischen der ersten und zweiten Baugruppe bewirkt werden kann. Grundsätzlich, jedoch nicht so präzise, ist allerdings auch eine Steuerung über gleichwirkende Bowdenzüge möglich.

Vorteilhaft kann in dieser Ausführung das Lenkgestänge über mindestens einen Umlenkhebel mit einer Lenkvorrichtung an der Handführvorrichtung verbunden werden. Auch ist es möglich, das Lenkgestänge als klappbare Kardanwelle mit mindestens einem Kardangelenk auszuführen, welches mit dem Zwischenring über eine weitere Verzahnung und ein Zahnsegment mit der Kardanwelle in Verbindung steht und durch diese angetrieben wird.

Eine weitere Ausgestaltung sieht vor, dass die Handführungsvorrichtung an ihrem unteren Ende ein Zahnrad, z.B. ein Kegelrad, aufweist, das in eine an dem Auflieger angebrachte Gegenverzahnung eingreift. Durch Drehen des Handrades wird das Zahnrad gedreht und dadurch die beiden Baugruppen gegeneinander verschwenkt.

Das Verschwenken der Bauteile kann auch durch ein Schwenken der Führungseinrichtung eingeleitet werden. Dabei wird die Führungseinrichtung ebenfalls über ein Getriebe mit dem vorderen Bauteil verbunden. Am unteren Ende des Bügels, das am Rasenmäher gelenkig gelagert ist, kann zum Beispiel eine Verzahnung angebracht sein, die in eine Gegenverzahnung des Aufliegers eingreift. Durch seitliches Schwenken der Führungseinrichtung werden die beiden Baugruppen gegeneinander verschwenkt. Die Schwenkbewegung ist dabei entgegengesetzt zur Lenkbewegung. Ein Schwenken der Führungseinrichtung nach links führt zu einem Schwenken der vorderen Baugruppe nach rechts.

Es ist auch möglich, zwischen der Verzahnung des Aufliegers und der Verzahnung der Führungseinrichtung ein zusätzliches Zahnrad einzufügen. Dann entspricht die Schwenkbewegung der Lenkbewegung. Erstaunlicherweise hat sich jedoch herausgestellt, dass eine Gegenläufigkeit zwischen der Lenkbewegung des Bedieners und der Schwenkbewegung der vorderen Baugruppe die Bedienbarkeit und insbesondere Lenkbarkeit des Rasenmähers subjektiv für den Bediener erhöht.

Entsprechend einer anderen und bevorzugten Ausführung des handgeführten Rasenmähers weist die Handführungsvorrichtung eine Lenkvorrichtung auf, die über Lenkmittel verfügt, welche durch eine Relativbewegung der Lenkvorrichtung zur Handführungsvorrichtung eine Schwenkbewegung zwischen der ersten und der zweiten Baugruppe um die Schwenkachse bewirken.

Beispielsweise kann dabei die Lenkvorrichtung über mindestens einen Bowdenzug mit der zweiten Baugruppe verbunden werden, so dass die Lenkvorrichtung durch eine Lenkbewegung relativ zur Handführungsvorrichtung das Drehmoment zwischen der ersten und der zweiten Baugruppe erzeugt und über den mindesten einen Bowdenzug überträgt. Bei dieser Ausführung ist es notwendig, dass der Bowdenzug sowohl Zug- als auch Druckkräfte überträgt.

Eine vorteilhaftere Ausführung besteht darin, dass die Lenkvorrichtung über zwei Bowdenzüge mit der zweiten Baugruppe verbunden ist, wobei jeder Bowdenzug die Zugkraft in eine Richtung überträgt.

Werden zwei Bowdenzüge eingesetzt, so können diese zwei Bowdenzüge sich auf ihrem Weg überkreuzen, wodurch eine gegenläufige Bewegung zwischen der Lenkbewegung der Lenkvorrichtung und der Schwenkbewegung der vorderen Baugruppe entsteht. Diese Gegenläufigkeit führte zu einem besonders angenehmen Steuerverhalten für den Bediener.

Die Lenkvorrichtung kann beispielhaft einen drehbaren Rotationskörper, vorzugsweise eine Scheibe, aufweisen, an dem ein Ende des mindestens einen Bowdenzuges befestigt ist oder einen drehbaren Hebelarm besitzen, an dem ein Ende des mindestens einen Bowdenzuges befestigt ist.

Anstelle des mindestens einen Bowdenzuges kann auch mindestens ein Zug-/Schubgestänge oder ein Seilzugsystem mit Umlenkungen vorgesehen sein oder auch ein Hydrauliksystem mit mindestens einer Hydraulikverbindung und Hydraulikaktuatoren, insbesondere Hydraulikzylindern, angebracht werden.

Die Lenkmittel zur Kraftübertragung einer Lenkbewegung in eine Schwenkbewegung der zweiten Baugruppe sollte dabei so angeordnet sein, dass die Lenkbewegung und die Schwenkbewegung der zweiten Baugruppe gegenläufig verlaufen, da dies ergonomisch besonders günstig ist. Es wird jedoch daraufhin gewiesen, dass auch eine Gleichläufigkeit zwischen Lenkbewegung und der Schwenkbewegung der zweiten Baugruppen den Rahmen der Erfindung wie beansprucht nicht verlässt.

Als besonders vorteilhaft hat sich erwiesen, wenn eine um eine Lenkachse drehbare Lenkvorrichtung vorgesehen ist und die Lenkachse zur Schwenkachse in einem Winkel von 0° bis 50°, vorzugsweise 20° bis 40°, angeordnet ist. Dabei ist es besonders günstig, wenn die von der Lenkachse und der Schwenkachse aufgespannte Ebene vertikal verläuft.

Obwohl die Lenkbarkeit der beiden Baugruppen für das Mähen verwinkelter Rasenstücke und um Hindernisse besonders günstig ist, ergibt sich jedoch auch immer wieder die Notwendigkeit längere gerade Strecken zu bearbeiten. Hierfür ist es vorteilhaft, wenn mindestens eine Arretierung vorgesehen ist, welche die beiden Baugruppen in Geradeauslaufrichtung fixieren kann. Diese Arretierungen können besonders günstig entweder im Bereich der Lenkvorrichtung selbst und oder im Bereich des Schwenklagers angebracht werden. Grundsätzlich ist eine einzige Arretierung ausreichend, jedoch ist es besser, wenn an beiden genannten Orten Arretierungen angebracht werden, da damit eine unnötige dauerhafte Belastung der Übertragungsvorrichtung der Lenkkräfte vermieden werden kann.

Eine vorteilhafte Ausführung der mindestens einen Arretierungsvorrichtung kann darin liegen, dass diese federbelastet ausgeführt ist und automatisch beim Ausrichten der beiden Baugruppen einrastet.

Weiterhin kann die mindestens eine Arretierungsvorrichtung über einen handbetätigten Entsperrmechanismus verfügen. Werden mehrere Arretierungsvorrichtungen, vorzugsweise eine an der Lenkvorrichtung und eine im Bereich der Schwenklagerung der ersten und zweiten Baugruppe, angebracht, so können diese gleichzeitig durch einen gemeinsamen Bedienungshebel, gegebenenfalls verbunden durch einen Bowdenzug, betätigt werden.

Werden sowohl an der Lenkvorrichtung als auch an der Schwenklagerung Arretierungsvorrichtungen angebracht, so ist es vorteilhaft, wenn diese Arretierungsvorrichtungen bezüglich ihres Einrastpunktes einen gewissen Spielraum aufweisen, so dass Ungenauigkeiten bei der Justierung ausgeglichen werden.

Bevorzugt kann die in Fahrtrichtung hintere Baugruppe, das Mähergehäuse, mindestens zwei seitlich hinten angeordnete Räder aufweisen. Alternativ zu den Rädern kann auch eine breite Walze angebracht werden, wobei darauf geachtet werden sollte, dass die Walze ausreichend breit ausgebildet wird, um ein Kippen des Rasenmähers beim Einlenken zu verhindern.

Weiterhin kann die Handführungsvorrichtung als Bügel oder Lenkstange ausgebildet sein. Zur Verbesserung der Zugänglichkeit eines gegebenenfalls angebrachten Grasfangkorbes und der Staubarkeit des Rasenmähers kann die Handführungsvorrichtung klappbar ausgeführt sein. Zur Verbesserung der Anpassung an die jeweils bedienende Person kann die Handführungsvorrichtung in der Länge und/oder der Höhe verstellbar ausgeführt werden.

Zur Anpassung an die Unfallverhütungsvorschriften kann an der Handführungsvorrichtung, vorzugsweise an der Lenkvorrichtung, ein Todmannhebel angebracht werden, der beim Loslassen sofort den Antrieb des Mähwerks unterbricht.

Wird der handgeführter Rasenmäher derart ausgeführt, dass der Motor auch auf den Vortrieb des Rasenmähers aufschaltbar ist, so kann an der Handführungsvorrichtung, vorzugsweise an der Lenkvorrichtung, ein Schalthebel für den Vortrieb angebracht werden.

Entsprechend den Anforderungen an den Antrieb kann der Motor als Elektromotor oder Benzinmotor oder Dieselmotor ausgebildet sein.

Die erste und zweite Baugruppe kann insgesamt mindestens drei Räder und jeweils mindestens ein Rad aufweisen, wobei die zweite Baugruppe mindestens zwei Räder aufweist, und wobei vorzugsweise die Räder der ersten und zweiten Baugruppe an einer, relativ zur zugehörigen Baugruppe, starren Achse gelagert sind. Auch können die Räder zumindest einer Baugruppe höhenverstellbar ausgeführt werden, um den Rasenmäher an die Schnitthöhe anzupassen.

In einer besonderen Ausführung des Rasenmähers wird die Antriebsachse des Motors innerhalb der Schwenklagerung der Baugruppen angeordnet, wobei vorzugsweise die Schwenkachse der Baugruppen und die Antriebsachse des Motors koaxial angeordnet sind.

Ist die Abtriebsachse des Motors nicht unmittelbar auch Antriebsachse des Schneidwerkzeuges, so ist es für eine besonders kompakte Bauweise des Rasenmähers sehr vorteilhaft, wenn zumindest die Antriebsachse des Schneidwerkzeuges innerhalb der Schwenklagerung der ersten und zweiten Baugruppe, vorzugsweise koaxial zur Schwenkachse, angeordnet ist.

Es wird auch darauf verwiesen, dass es nicht nur im beanspruchten Rahmen der Erfindung liegt, sondern für eine einfache und kompakte Bauweise besonders vorteilhaft sein kann, wenn keines der Räder eine Antrieb aufweist.

Im folgenden wird die Erfindung anhand der bevorzugten Ausführungsbeispiele mit Hilfe der Figuren näher beschrieben, wobei darauf hingewiesen wird, dass nur die für das unmittelbare Verständnis der Erfindung wesentlichen Elemente gezeigt sind.

Es zeigen im einzelnen:
- Figur 1:: Aufsicht auf einen Rasenmäher mit schwenkbarer Handführungsvorrichtung und Zahnradlenkung im Geradeauslauf;
- Figur 2:: Aufsicht auf einen Rasenmäher mit schwenkbarer Handführungsvorrichtung und Zahnradlenkung in einer Linkskurve;
- Figur 3:: Aufsicht auf einen Rasenmäher mit drehbarer Lenkstange als Handführungsvorrichtung und Zahnradlenkung im Geradeauslauf;
- Figur 4:: Aufsicht auf einen Rasenmäher mit drehbarer Lenkstange als Handführungsvorrichtung und Zahnradlenkung in einer Rechtskurve;
- Figur 5:: 3D-Ansicht eines Rasenmähers mit schwenkbaren Baugruppen und Lenkvorrichtung;
- Figur 6:: Aufsicht auf den Rasenmäher der Figur 5 in einer Rechtskurve mit gekreuzten Bowdenzügen;
- Figur 7-9:: Detailansichten der Lenkvorrichtung;
- Figur 10:: Ansicht einer Lenkvorrichtung mit Hebelarmen von unten;
- Figur 11:: Längsschnitt durch die erste und zweite Baugruppe des Rasenmähers;
- Figur 12:: 3D-Ansicht eines Rasenmähers mit schwenkbaren Baugruppen und einer Lenkvorrichtung mit Schubstangen;
- Figur 13:: Aufsicht auf den Rasenmäher aus Figur 12 im Bereich der kombinierten Schwenklagerung und Lenkgetriebe;
- Figur 14:: 3D-Schrägansicht des Rasenmähers aus Figur 12 im Bereich der kombinierten Schwenklagerung und Lenkgetriebe;
- Figur 15:: 3D-Ansicht eines Rasenmähers mit schwenkbaren Baugruppen und einer Lenkvorrichtung mit Kardanwelle;
- Figur 16:: Aufsicht auf den Rasenmäher aus Figur 15 im Bereich der kombinierten Schwenklagerung und Lenkgetriebe;
- Figur 17:: 3D-Schrägansicht des Rasenmähers aus Figur 15 im Bereich der kombinierten Schwenklagerung und Lenkgetriebe, Darstellung mit Verzahnung am Zwischenring;
- Figur 18:: 3D-Schrägansicht des Rasenmähers aus Figur 15 im Bereich der kombinierten Schwenklagerung und Lenkgetriebe, Darstellung ohne Verzahnung am Zwischenring.

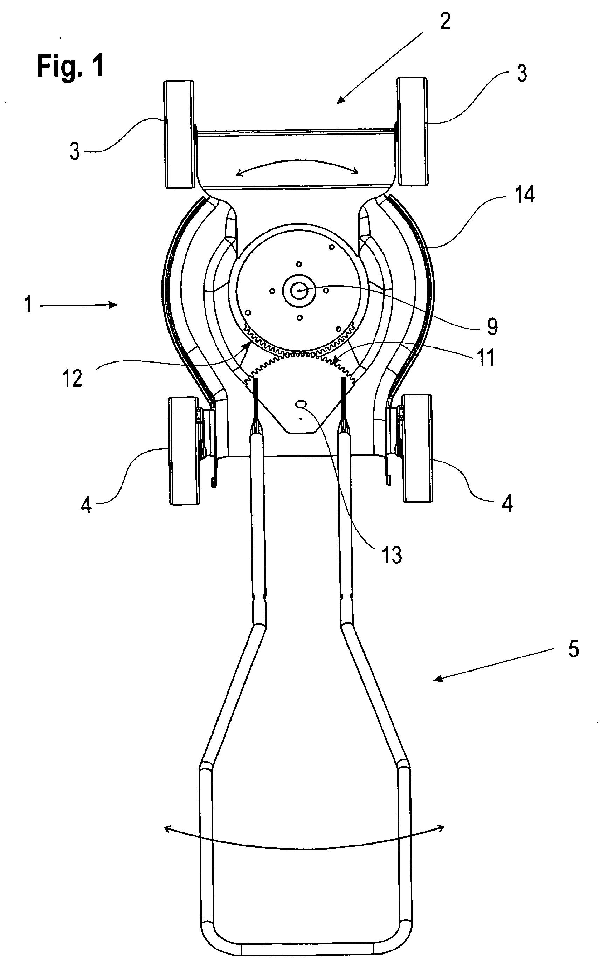

In den Figuren 1 bis 4 sind Ausführungsvarianten des erfindungsgemäßen Rasenmähers mit einem Zahnradgetriebe dargestellt.

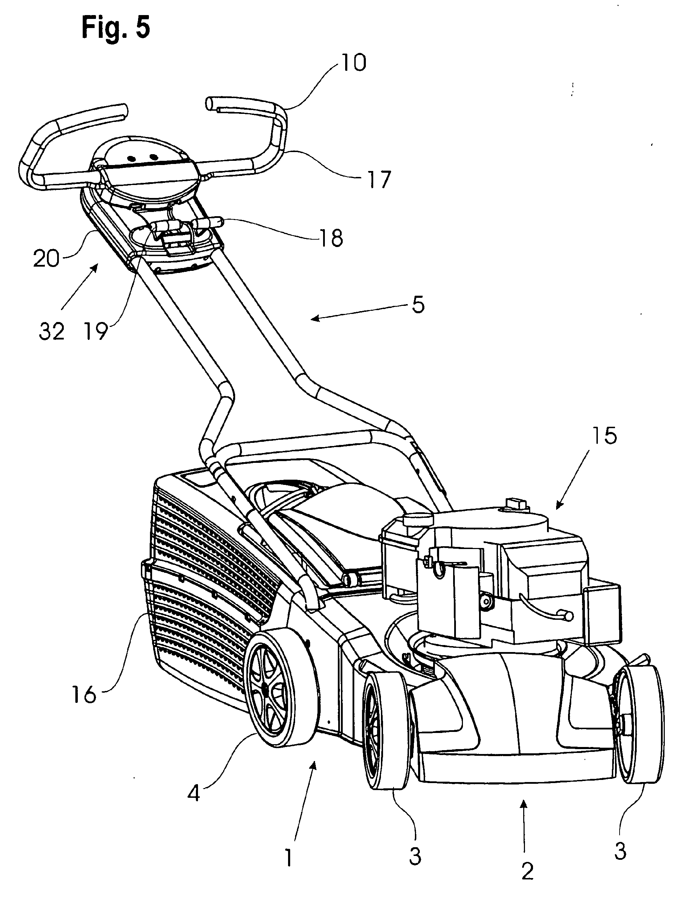

Die Figuren 5 bis 11 zeigen eine Ausführung mit einem Bowdenzug, zur Steuerung der vorderen Baugruppe.

In der **Figur 1** ist eine Aufsicht auf einen erfindungsgemäßen Rasenmäher zu erkennen, der aus einer ersten hinteren Baugruppe 1 besteht, die über zwei, an einer starren Achse befestigten Räder 4 verfügt. Auf der ersten Baugruppe 1 ist schwenkbar eine vordere, zweite Baugruppe 2 aufgelegt, die ebenfalls über zwei Räder 3 verfügt, die an einer feststehenden Achse mit der zweiten Baugruppe 2 verbunden sind. Im Bereich der Lagerung der zweiten Baugruppe 2 auf der ersten Baugruppe 1 befindet sich ein großer Zahnkranz 12, der fest mit der zweiten Baugruppe verbunden ist. Die Handführungsvorrichtung 5 ist an einem segmentartig ausgebildeten Zahnrad 11 befestigt, welches in den Zahnkranz 12 eingreift und um eine Achse 13 schwenkbar gelagert ausgeführt ist. Wird die Handführungsvorrichtung seitlich verschwenkt, so wird ein Drehmoment über die beiden Verzahnungen 11 und 12 auf die vordere Baugruppe 2 übertragen, so dass der Rasenmäher um eine Kurve fährt.

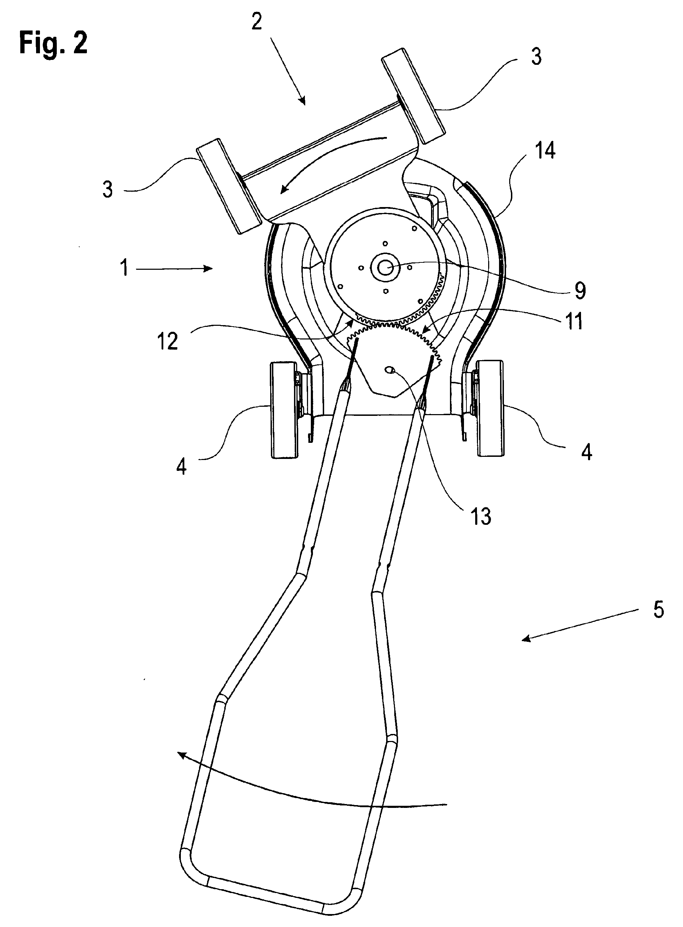

Eine solche Situation ist in der **Figur 2** dargestellt. Dabei wurde die Handführungsvorrichtung 5 in Fahrtrichtung gesehen nach links ausgeschwenkt, so dass die vordere Baugruppe 2 ebenfalls, aufgrund der Verzahnung, nach links geschwenkt wird. Hierbei steht das Mähgehäuse seitlich aus der Verbindungslinie zwischen dem rechten Vorderrad 3 und dem rechten Hinterrad 4 heraus, so dass bei dieser Kurvenfahrt sehr eng an Hindernisse herangemäht werden kann.

Soll anstelle der Gegenläufigkeit der beiden Schwenkbewegungen zwischen der vorderen Baugruppe 2 und der gesamten Handführungsvorrichtung 5 beim Lenkvorgang umgekehrt werden, so besteht die Möglichkeit, zwischen den beiden Verzahnungen ein zusätzliches Übertragungszahnrad einzusetzen, so dass eine Gleichläufigkeit der Lenkbewegung und der Schwenkbewegung der vorderen Baugruppe 2 entsteht. Es hat sich jedoch gezeigt, dass die in den Figuren 1 und 2 dargestellte Situation der Gegenläufigkeit zwischen Lenkbewegung und Schwenkbewegung der vorderen Baugruppe ergonomischer ist, als eine gleichgerichtete Bewegung dieser beiden Funktionselemente.

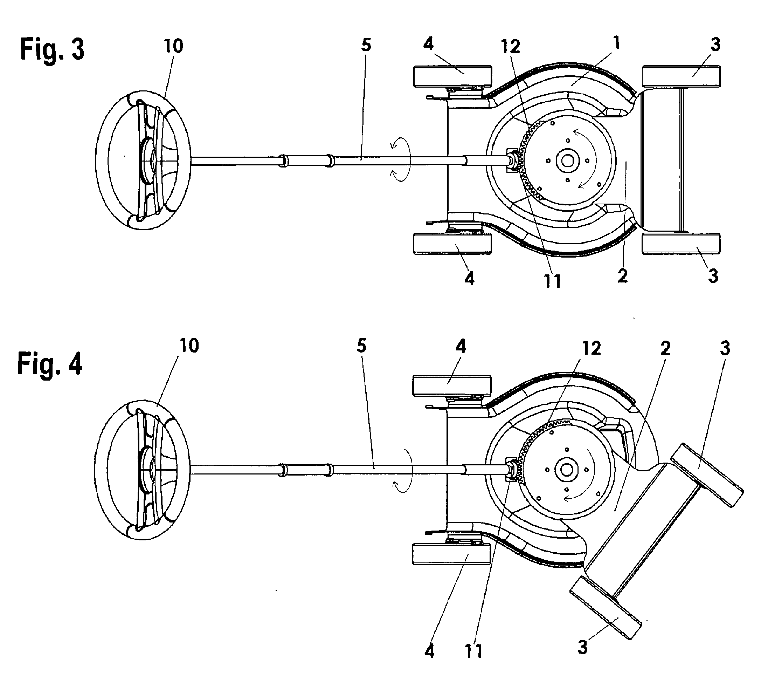

Eine andere erfindungsgemäße Ausführung eines Rasenmähers mit einem Zahnradgetriebe ist in den Figuren 3 und 4 dargestellt, während die **Figur 3** den Rasenmäher im Geradeauslauf und die **Figur 4** den Rasenmäher in einer Rechtskurve darstellt. Hierbei ist die vordere Baugruppe 2 wiederum fest mit einem Zahnkranz verbunden, wobei die Handführungsvorrichtung 5 aus einem drehbar gelagerten Rohr besteht, welches am vorderen Ende eine Verzahnung 11 aufweist, die in die Verzahnung 12 der vorderen Baugruppe 2 eingreift. Am hinteren Ende des Rohres ist eine Lenkrad 10 befestigt. Ein drehendes Lenkrad 10 bewirkt über die beiden Verzahnungen 11 und 12 eine Schwenkbewegung der vorderen Baugruppe 2 relativ zur hinteren Baugruppe 1, so dass hierdurch ein einfaches und präzises Lenken des gesamten Rasenmähers, ähnlich wie bei einem PKW, möglich ist. Bei dieser Art des Ausführung hat es sich, im Gegensatz zu den anderen gezeigten Ausführungen, als besonders günstig erwiesen, wenn die Lenkbewegung am Lenkrad 10 gleichläufig mit der Schwenkbewegung der vorderen Baugruppe 2 ausfällt. Bei den hier gezeigten Varianten in den Figuren 1 bis 4 ist noch zu bemerken, dass die Antriebswelle 9 des hier nicht explizit dargestellten Antriebsmotors koaxial zur Schwenkachse der vorderen Baugruppe 2 angeordnet ist und einen im Mähgehäuse 14 rotierenden Mähbalken antreibt.

In den folgenden Figuren 5 bis 11 ist der erfindungsgemäße Rasenmäher mit einer etwas anderen Steuerungsvariante dargestellt, wobei die Handführungsvorrichtung 5 eine Art Lenkbügel aufweist, der relativ zu der fest mit der hinteren Baugruppe verbundenen Handführungsvorrichtung drehbar verbunden ist und über zwei Bowdenzüge die Drehung des Lenkbügels an die vordere Baugruppe überträgt.

Die **Figur 5** zeigt eine 3D-Ansicht eines derartigen erfindungsgemäßen Rasenmähers, der aus der ersten Baugruppe 1 und der darauf schwenkbar gelagerten zweiten Baugruppe 2 besteht. Beide Baugruppen 1 und 2 verfügen jeweils über zwei Laufräder 4 und 3. An der ersten Baugruppe 1 ist hinten ein Grasfangkorb 16, zum Auffangen des Grasschnittes, angebracht. Der Rasenmäher wird durch einen oben aufgesetzten Motor 15 angetrieben. Dieser Antrieb wirkt in der hier dargestellten Ausführung auch auf die hinteren Räder 4, die separat zugeschaltet werden können. Die Handführungsvorrichtung 5 ist fest, jedoch in der Höhe und Neigung einstellbar, mit der hinteren Baugruppe 1 verbunden und weist an ihrem bedienerseitigen Ende einen Lenkbügel 10 auf, der drehbar um eine hier nicht dargestellt Lenkachse gelagert ist. Die Lenkmechanik im Bereich des Lenkbügels wird durch ein Gehäuse 20 verdeckt. An diesem Gehäuse 20 ist auch ein Gashebel 19 zur Regulierung des Motors 15 und ein Arretierungshebel 18 zur Bestätigung der Arretierung für einen Geradeauslauf der beiden Baugruppen angebracht.

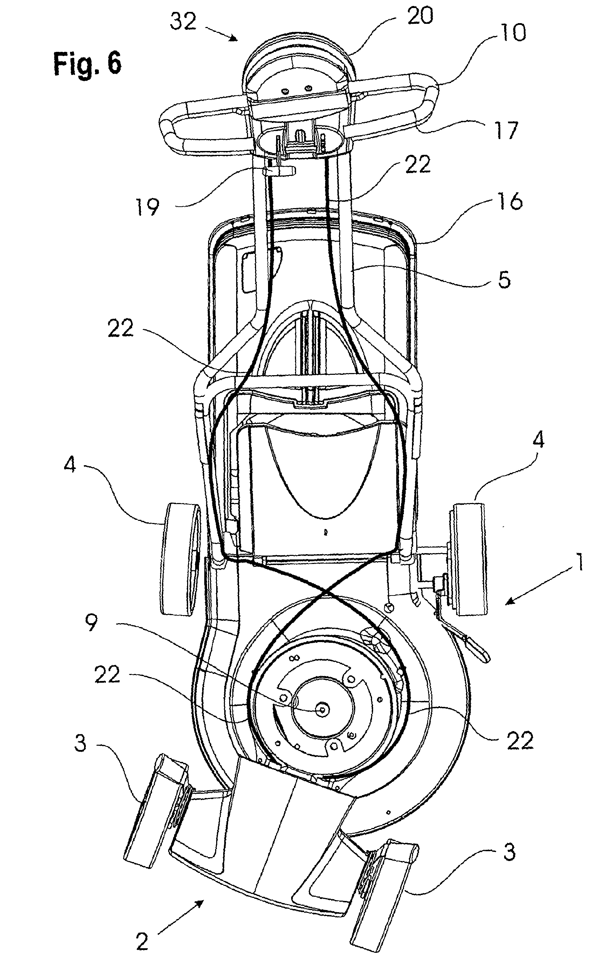

Die **Figur 6**, die eine Draufsicht auf den Rasenmäher aus der Figur 5 in einer Rechtskurve darstellt, zeigt besonders gut die Führung der beiden Bowdenzüge 22 zwischen dem Lenkbügel und der vorderen Baugruppe 2. Diese Führung der beiden Bowdenzüge 22 verläuft über kreuz, so dass eine gegenläufige Bewegung zwischen dem Lenkbügel 10 und der Baugruppe 2 entsteht.

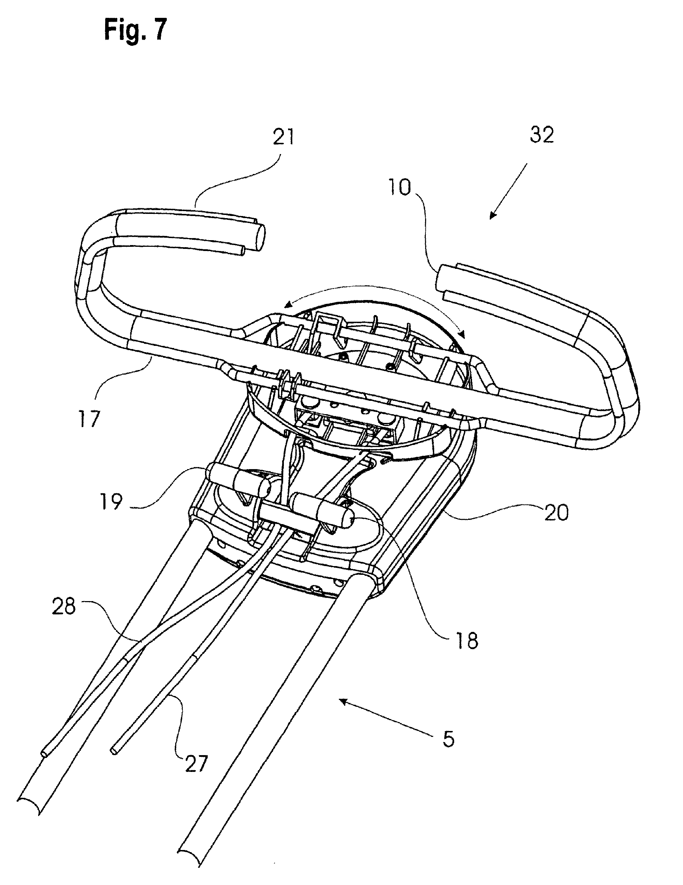

Zur Verdeutlichung der Funktion der Lenkung ist die Handführungsvorrichtung 5 im Bereich des Lenkbügels 10 in den Figuren 7 bis 9 vergrößert dargestellt.

In der **Figur 7** ist die Handführungsvorrichtung 5 mit der Lenkmechanik und den Schaltelementen zur Bedienung des Rasenmähers gezeigt.

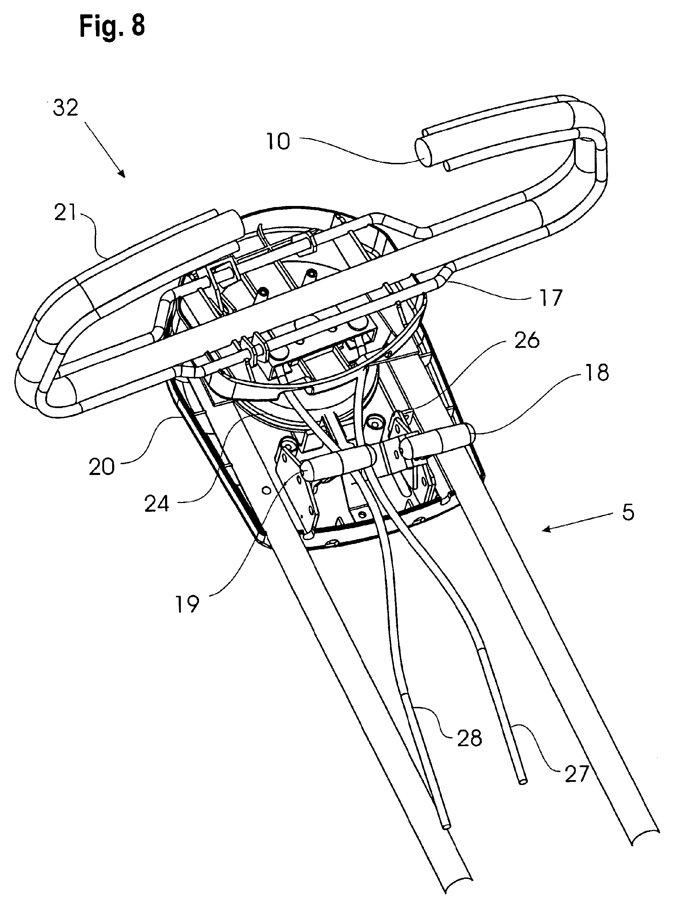

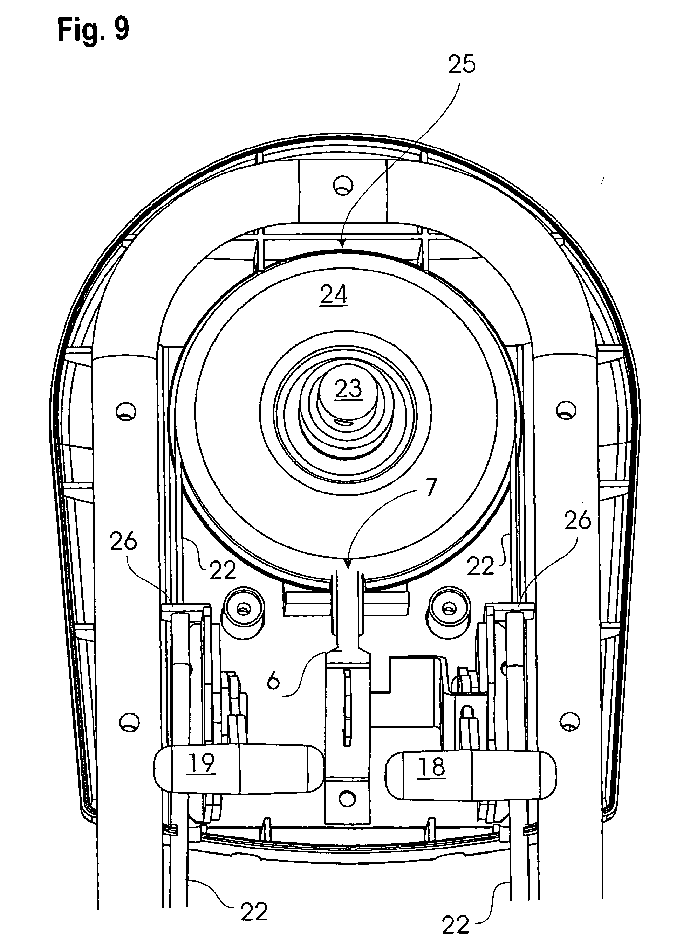

Die **Figur 8** zeigt in einer ähnlichen Ansicht die Lenkmechanik, jedoch mit einem oben offenen Deckel des Gehäuses 20, so dass auch die Lenkscheibe 24 sichtbar wird, während in der **Figur 9** auf die Darstellung des Lenkbügels verzichtet wurde und im wesentlichen in einer Draufsicht die Ebene der Lenkscheibe dargestellt ist. Der Lenkbügel 10 ist dabei drehbar um die Lenkachse 23 gelagert und am oberen Ende der Handführungsvorrichtung 5 befestigt. Mit der Lenkachse 23 verbunden ist eine Lenkscheibe 24, welche mit den Enden der Bowdenzüge 22 am Befestigungspunkt 25 verbunden ist. Ein Verschwenken des Lenkbügels 10 erzeugt eine Drehung der Lenkscheibe 24 und die Einleitung eines Zuges und Druckes auf die beidseits angebrachten Bowdenzüge 22, die in den Gegenlagern 26 befestigt sind. Somit wird bei einer Lenkbewegung einer der Bowdenzüge 22 verkürzt und der andere entsprechend verlängert, so dass das am Lenkbügel 10 erzeugte Drehmoment zur zweiten Baugruppe 2 über die Bowdenzüge übertragen werden kann. Zur Arretierung des Geradeauslaufes verfügt die Lenkmechanik über einen Arretierungshebel 18, der eine Arretierungsfeder 6 entlasten beziehungsweise belasten kann, so dass diese Feder bei einer Geradeausstellung in einer Aussparung 7 der Lenkscheibe 24 eingreifen kann und damit den Geradeauslauf des Rasenmähers fixiert. Über den ebenfalls dargestellten Gashebel 19 wird der Motor des Rasenmähers gesteuert.

Zusätzlich befinden sich an die Kontur des Lenkbügels 10 angepasst zwei Schalthebel 17 und 21, wobei der Schalthebel 17 als sogenannter "Todmannschalter" verwendet wird, der über den Bowdenzug 28 beim Auslassen eine sofortige Stilllegung des Rasenmähers erzeugt. Mit dem Schalthebel 21 wird über den Bowdenzug 27 der Antrieb der hinteren Laufräder durch den Motor ein- und ausgeschaltet.

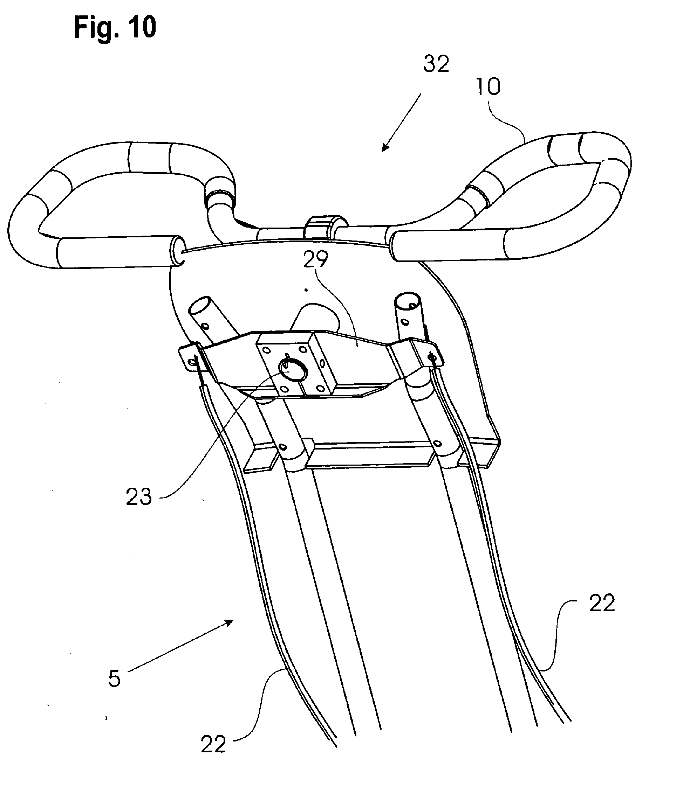

Eine andere erfindungsgemäße Variante der Lenkmechanik ist in der **Figur 10** dargestellt. Auch diese zeigt den oberen Bereich der Handführungsvorrichtung 5 mit dort angeordneten Lenkmechanik. Hier ist ein Lenkbügel 10 wiederum mit einer Lenkachse 23 befestigt, die mit einem Hebelarm 29 verbunden ist, an dessen äußeren Enden, die Bowdenzüge 22 zur Lenkung des Rasenmähers befestigt sind. Zur Vereinfachung der Darstellung sind Gegenlager für die Bowdenzüge nicht gezeigt. Wird der Lenkbügel 10 auf einer Seite in Fahrtrichtung bewegt, so erfolgt eine entsprechende Verkürzung des Bowdenzuges 22 auf dieser Seite und eine Verlängerung des Bowdenzuges auf der Gegenseite. Diese dort eingeleitete Zug- und Druckkraft wird entsprechend an die vordere Baugruppe weitergeleitet, so dass hierdurch die gewünschte Lenkbewegung entsteht. Werden die Bowdenzüge 22 über kreuz zur vorderen Baugruppe geführt, so entsteht die gewünschte gegenläufige Bewegung zwischen der vorderen Baugruppe 2 und dem Lenkbügel 10, der zu einer besonders ergonomischen Lenkung des Rasenmähers führt.

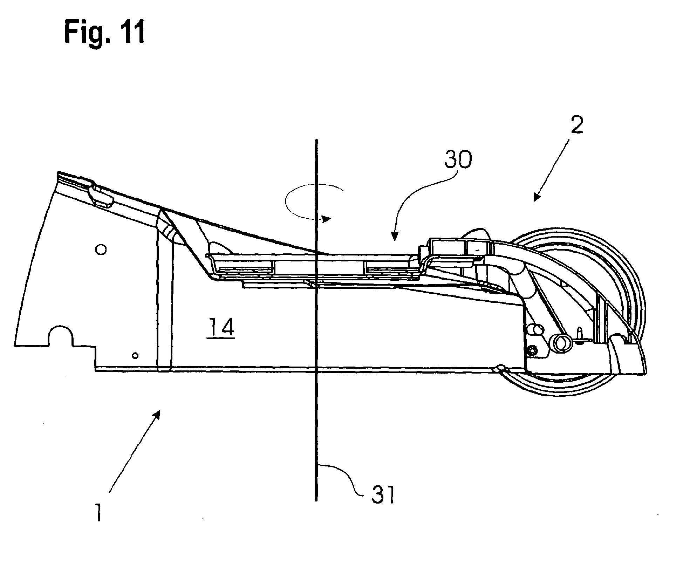

In der **Figur 11** ist nochmals zum besseren Verständnis ein Längsschnitt durch das Vorderteil des Rasenmähers mit den beiden gegeneinander verschwenkbaren Baugruppen 1 und 2 dargestellt. Die Figur 11 zeigt das Mähgehäuse 14, in dem die hier nicht dargestellten Mähbalken verlaufen. Die vordere Baugruppe 2 ist über eine Gleitlagerung 30 mit der hinteren Baugruppe 1 verbunden, so dass die zweite Baugruppe 2 gegenüber der ersten Baugruppe 1 um die hier angedeutete Schwenkachse 31 zur Lenkung des Rasenmähers geschwenkt werden kann.

Durch die Gleitlagerung 30 hindurch verläuft auch die Antriebswelle für den oder die Mähbalken, wobei darauf hingewiesen wird, dass auch mehr als ein Mähbalken durch diese Antriebswelle angetrieben werden kann. Die eine oder auch mehrere Antriebswellen müssen dabei nicht unbedingt konzentrisch mit der Schwenkachse 31 der beiden gegeneinander verschwenkbaren Baugruppen verlaufen.

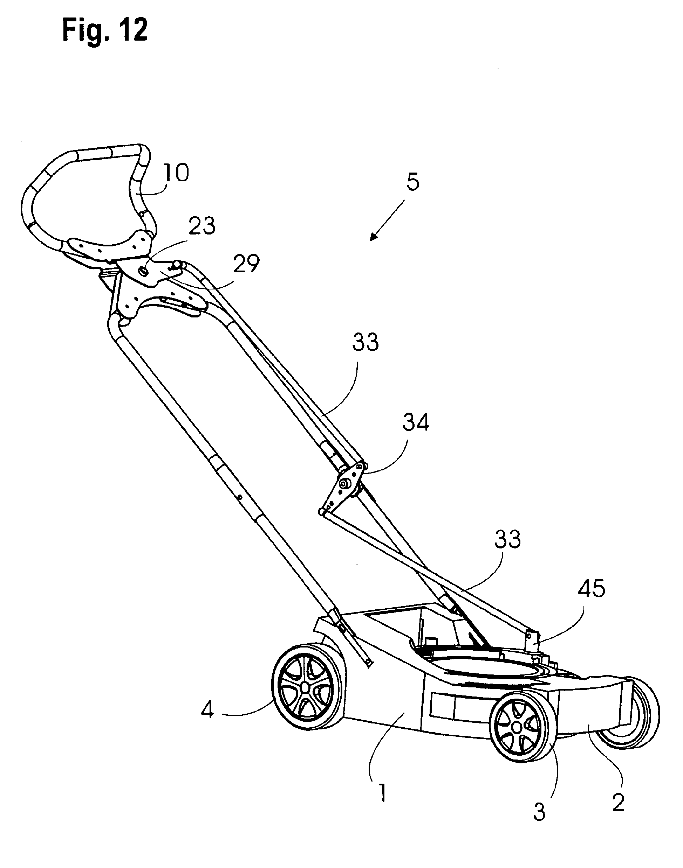

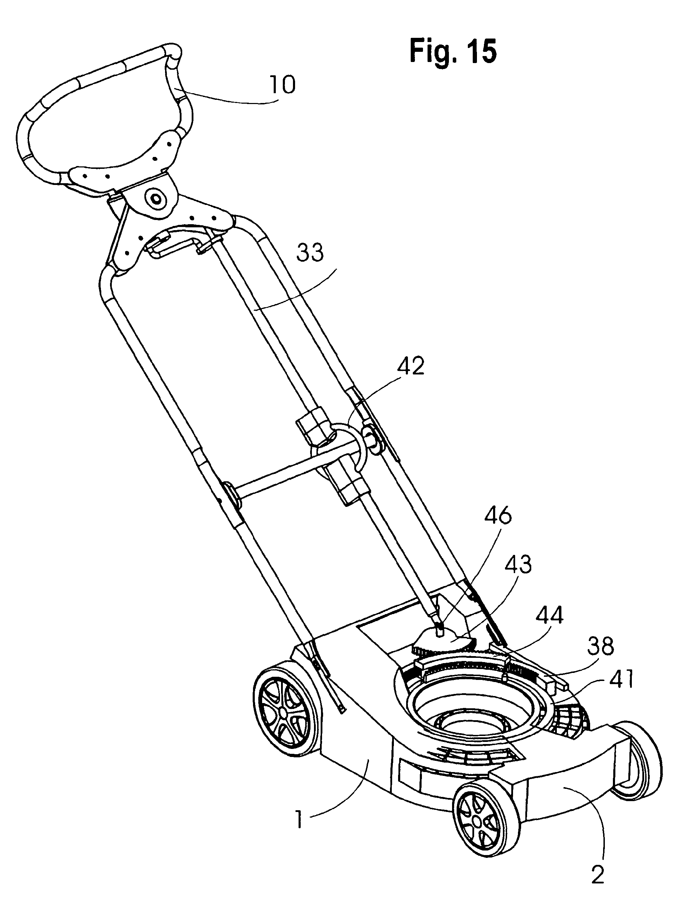

In den Figuren 12 bis 18 sind besondere Ausführungsformen einer Kombination von Schwenklagerung zwischen den beiden Baugruppen und dem Lenkgetriebe dargestellt. Die erste Ausführungsvariante ist in den Figuren 12 bis 14 gezeigt, wobei es sich hier um eine Schubstangenlenkung handelt, während in den Figuren 15 bis 18 eine Variante mit einer Kardanwelle als Lenkantrieb dargestellt ist.

Die **Figur 12** zeigt eine 3D-Ansicht eines erfindungsgemäßen Rasenmähers mit schwenkbaren Baugruppen 1 und 2, mit einem Lenkgestänge, welches als Schubgestänge 33 ausgebildet ist. Zur besseren Übersichtlichkeit wurde in dieser und in den folgenden Figuren auf die Darstellung eines Motors verzichtet. Ebenso wird das Mähwerk, welches sich im Gehäuse der ersten Baugruppe 1 befindet nicht explizit dargestellt. Die Figur 12 zeigt den Rasenmäher mit der Handführungsvorrichtung 5, an der oben ein Lenkbügel 10 angebracht ist, der um die Achse 23 verschwenkt werden kann und dabei den Hebelarm 29 auslenkt. An diesem ist das Lenkgestänge 33, das hier als Schub-/Zuggestänge ausgeführt ist, angelenkt und das erste Segment dieses Gestänges 33 führt zu einem ersten Umlenkhebel 34, an dessen beiden Hebelarmen die Schubstangensegmente 33 befestigt sind. Das untere Schubstangensegment 33 führt dann zu einer Anlenkstutze 45, der letztendlich durch die Lenkbewegung am Lenkbügel 10 vor und zurück bewegt wird.

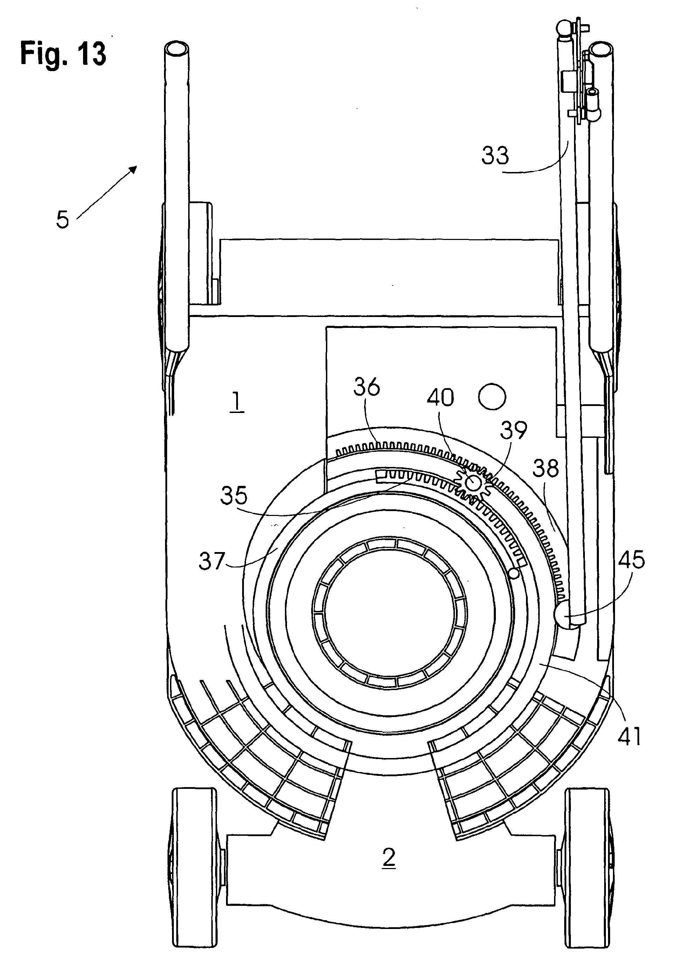

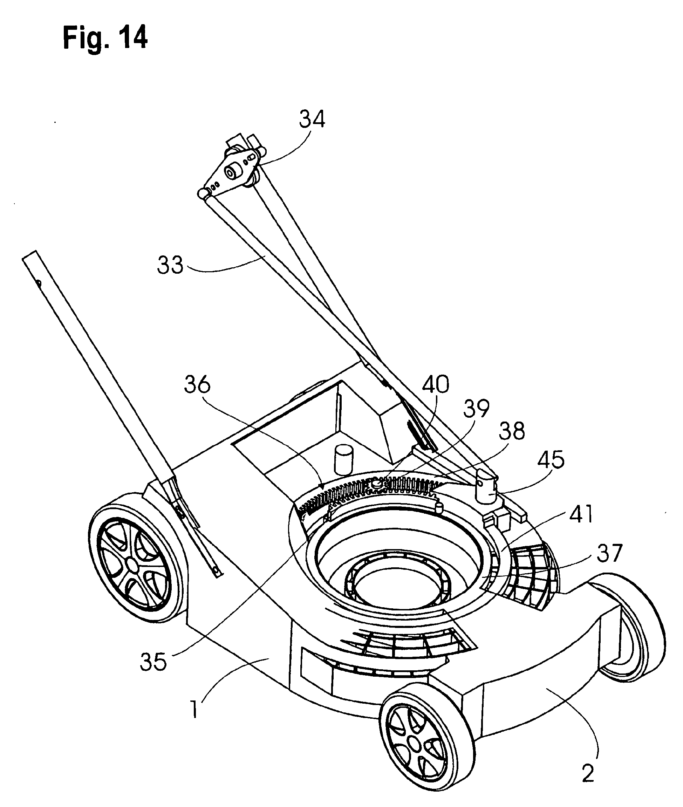

Die genauere Mechanik der Lenkung lässt sich in den nachfolgenden **Figuren 13** **und** **14** besonders gut erkennen. Der Anlenkstutzen 45 weist eine direkte Verbindung zum Zwischenring 41 auf, so dass eine durch ein Vor- und Zurückschieben der Schubstange 33 eine Auslenkung der zweiten Baugruppe 2 gegenüber der ersten Baugruppe 1 erfolgt.

Es wird darauf hingewiesen, dass auch eine Anbringung des Anlenkstutzens 45 am ersten Lagerungsring der zweiten Baugruppe möglich ist, wobei hierdurch die Übersetzung zwischen der Bewegung am Lenkbügel und der Auslenkung der zweiten Baugruppe reduziert wird. Eine Änderung dieser Übersetzung kann auch durchgeführt werden, wenn die Schubstangen 33 mit ihren Befestigungspunkten am Umlenkhebel 34 verändert werden, so dass unterschiedliche Hebelarme und damit eine andere Übersetzung der Bewegungen erreicht wird.

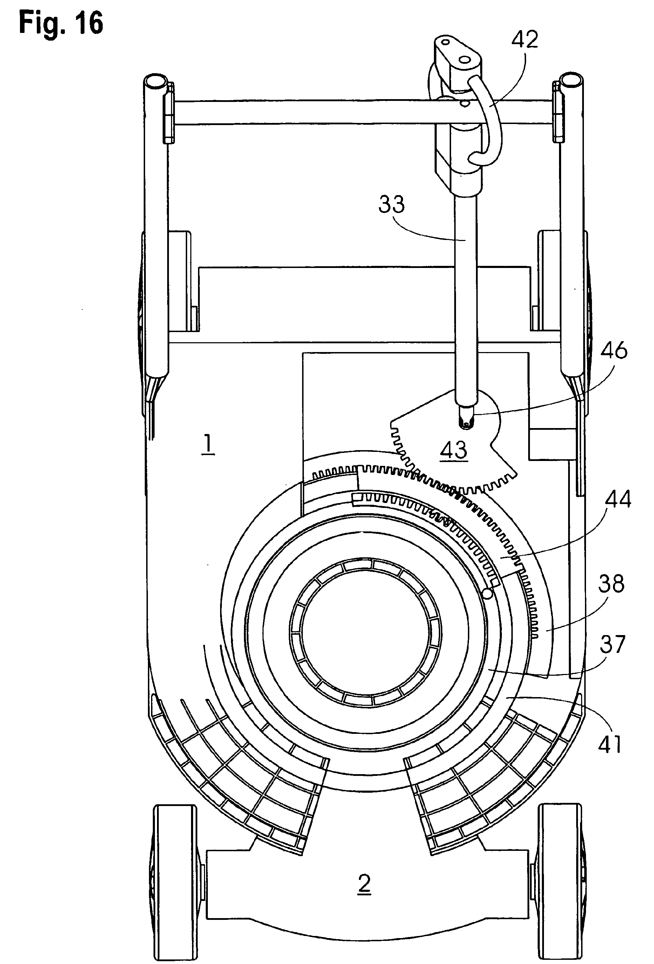

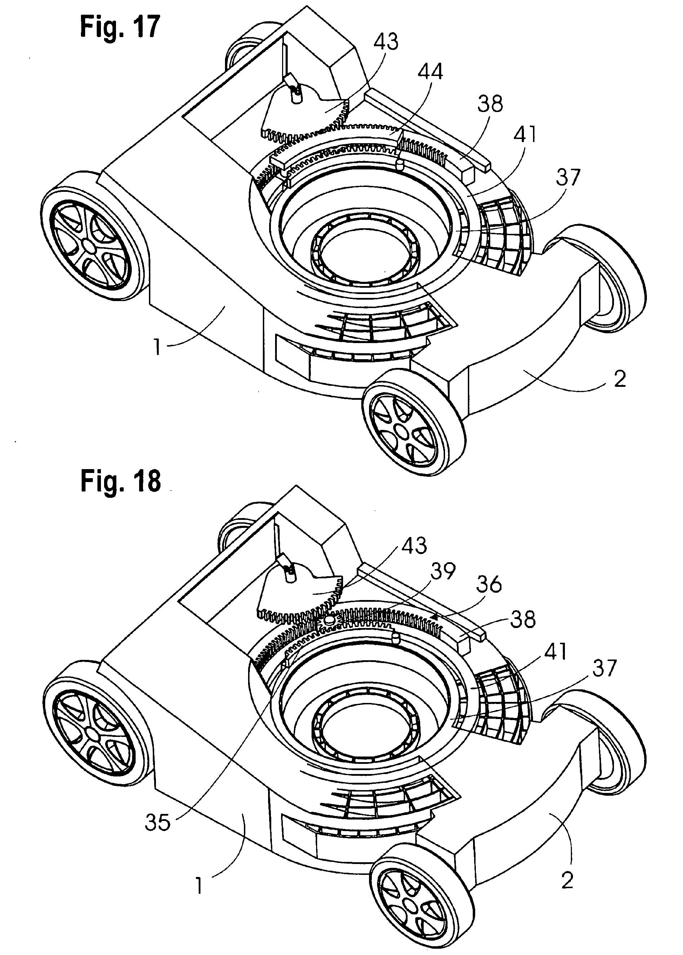

Die Figuren 15 bis 18 zeigen eine Ausführungsvariante der Lenkung über ein Lenkgestänge 33, welches als Kardanwelle ausgebildet ist. Die **Figur 15** zeigt dabei nochmals eine 3D-Ansicht eines entsprechenden Rasenmähers, wobei der Lenkbügel 10 dieses Mal über ein Hebelwerk das Lenkgestänge 33 rotatorisch antreibt. Das Lenkgestänge 33 verfügt im Bereich einer Verstrebung über ein Klappgelenk 42 und wird von dort über ein Kardangelenk 46 zu einem Zahnsegment 43 geführt, welches in eine Verzahnung 44 eingreift, die mit dem Zwischenring 41 verbunden ist. Durch eine Drehung des Zahnsegments 43 über die Kardanwelle 33 wird der Zwischenring 41 verschoben und treibt mit Hilfe des Zahnrades 39, das in die Verzahnung des Lagerungsringes der zweiten Baugruppe eingreift diese zu einer rotatorischen Bewegung gegenüber der ersten Baugruppe an. Diese Situation ist in der Draufsicht der **Figur 16** und in den Detailansichten der **Figuren 17 und 18** gut erkennbar dargestellt, wobei die Figuren 17 und 18 die gleiche schräge 3D-Detailansicht zeigen und in der Figur 18 gegenüber der Figur 17 lediglich die zusätzliche Verzahnung 44 zum Zahnsegment 43 weggelassen wurde.

Es ist noch darauf hinzuweisen, dass die beispielhaft dargestellten Rasenmäher selbstverständlich auch über eine Höhenverstellung der Räder verfügen.

Insgesamt wird mit der Erfindung also dadurch, dass Mittel vorgesehen sind, welche durch eine Relativbewegung zumindest zwischen Teilen der Handführungsvorrichtung und der ersten Baugruppe ein Drehmoment zwischen der ersten und der zweiten Baugruppe um die Schwenkachse erzeugen, ein lenkbarer Rasenmäher zur Verfügung gestellt, der mit geringerem manuellen Kraftaufwand sehr präzise gelenkt werden kann.

### Bezugszeichenliste

- 1: Mähergehäuse, hintere und erste Baugruppe
- 2: Auflieger, vordere und zweite Baugruppe
- 3: Vorderrad
- 4: Hinterrad
- 5: Handführungsvorrichtung
- 6: Arretierungsfeder
- 7: Arretierungsaussparung
- 9: Antriebswelle
- 10: Lenkrad / Lenkbügel
- 11: Zahnrad
- 12: Gegenverzahnung
- 13: Achse
- 14: Mähgehäuse
- 15: Motor
- 16: Grasfangkorb
- 17: Todmannbügel
- 18: Arretierungshebel
- 19: Gashebel
- 20: Lenkgehäuse
- 21: Antriebsschalter
- 22: Bowdenzug für Lenkung
- 23: Lenkachse
- 24: Lenkscheibe
- 25: Befestigungspunkt der Bowdenzüge an der Lenkscheibe
- 26: Gegenlager der Bowdenzüge
- 27: Bowdenzug für Antriebsschalter
- 28: Bowdenzug für Todmannschalter
- 29: Hebelarm
- 30: Gleitlagerung der vorderen Baugruppe
- 31: Schwenkachse
- 32: Lenkvorrichtung
- 33: Lenkgestänge / Kardanwelle
- 34: Umlenkhebel
- 35: erste Verzahnung
- 36: zweite Verzahnung
- 37: erster Lagerungsring
- 38: zweiter Lagerungsring
- 39: Zahnrad
- 40: Achse
- 41: Zwischenring
- 42: Klappgelenk
- 43: Zahnsegment
- 44: Verzahnung
- 45: Anlenkstutzen
- 46: Kardangelenk

## Patentansprüche

1. Handgeführter Rasenmäher, mit:
1.1. einer ersten und einer zweiten Baugruppe (1, 2), die zum Lenken des Rasenmähers gegeneinander um eine aufrecht, vorzugsweise senkrecht, stehende Schwenkachse (31) schwenkbar gelagert sind,
1.2. einem Motor mit einer Antriebswelle (9),
1.3. mindestens einem, jeweils um eine vertikale Achse rotierenden, Schneidwerkzeug, welches durch die Antriebswelle (9) mittelbar oder unmittelbar angetrieben wird, und
1.4. einer Handführungsvorrichtung (5) zur Führung des Rasenmähers durch eine Person, die an der ersten Baugruppe (1) angebracht ist, wobei
1.5. die zweite Baugruppe (2) mindestens zwei Räder (3) aufweist, deren Radachsen relativ zur jeweiligen Baugruppe fixiert sind,
1.6. in der ersten Baugruppe (1) das Schneidwerkzeug integriert und - von oben gesehen - im Rotationsbereich des Schneidwerkzeuges die Schwenklagerung für die zweite Baugruppe angeordnet ist, und
1.7. die zweite Baugruppe einen Auflieger besitzt, der mit den Rädern der zweiten Baugruppe um den Rotationsbereich des Schneidwerkzeuges schwenkt,
**dadurch gekennzeichnet, dass**
1.8. Lenkmittel (11, 12, 22, 24, 33) vorgesehen sind, welche durch eine Relativbewegung zumindest zwischen Teilen (10) der Handführungsvorrichtung (5) und der ersten Baugruppe (1) ein Drehmoment zwischen der ersten und der zweiten Baugruppe (1, 2) um die Schwenkachse (31) erzeugen.

2. Handgeführter Rasenmäher gemäß dem voranstehenden Anspruch 1, **dadurch gekennzeichnet, dass** die Handführungsvorrichtung (5) über ein Lenkgetriebe (11, 12) mit der zweiten Baugruppe (2) verbunden ist, welches das Drehmoment zwischen der ersten und der zweiten Baugruppe überträgt.

3. Handgeführter Rasenmäher gemäß dem voranstehenden Anspruch 2, **dadurch gekennzeichnet, dass** die Handführungsvorrichtung (5) eine Lenkvorrichtung, insbesondere eine Lenkstange (10) oder ein Lenkrad, aufweist, welche durch Drehen das Drehmoment einleitet.

4. Handgeführter Rasenmäher gemäß einem der voranstehenden Anspruch 2 oder 3, **dadurch gekennzeichnet, dass** das Lenkgetriebe und die Schwenklagerung funktional miteinander kombiniert ausgeführt sind.

5. Handgeführter Rasenmäher gemäß dem voranstehenden Anspruch 4, **dadurch gekennzeichnet, dass** das Lenkgetriebe und die Schwenklagerung aufweisen:
5.1. einen ersten Lagerungsring (37), der zumindest über ein Kreissegment eine Verzahnung (35) besitzt und mit der zweiten Baugruppe (2) verbunden ist,
5.2. einen zweiten Lagerungsring (38) mit einer Verzahnung (36) der konzentrisch zum ersten Lagerungsring (37) angeordnet ist und mit der ersten Baugruppe (1) verbunden ist, und
5.3. ein zwischen beiden Verzahnungen (35, 36) angeordnetes und in diese Verzahnungen eingreifendes Zahnrad (39), das auf einer Achse (40) gelagert ist, die senkrecht auf einem rotierbaren Zwischenring (41) befestigt ist.

6. Handgeführter Rasenmäher gemäß dem voranstehenden Anspruch 5, **dadurch gekennzeichnet, dass** der Zwischenring (41) von einem Lenkgestänge (33) angesteuert wird.

7. Handgeführter Rasenmäher gemäß einem der vorangehenden Ansprüche 1 bis 3, **dadurch gekennzeichnet, dass** die Handführungsvorrichtung (5) an der dem Rasenmäher zugewandten Ende mit einer Verzahnung (11) versehen ist, die in eine an der zweiten Baugruppe (2) angeordnete Verzahnung (12) eingreift und durch Drehen von zumindest einem Teil (10) der Handführungsvorrichtung (5) die beiden Baugruppen (1, 2) gegeneinander verschwenkt werden.

8. Handgeführter Rasenmäher gemäß dem voranstehenden Anspruch 2, **dadurch gekennzeichnet, dass** die Handführungsvorrichtung (5) an der dem Rasenmäher zugewandten Ende mit einer Verzahnung (11) versehen ist, die in eine mit der zweiten Baugruppe (2) befestigte Verzahnung (12) eingreift und durch seitliches Schwenken der Handführungsvorrichtung (5) relativ zur ersten Baugruppe (1), die beiden Baugruppen (1, 2) gegeneinander verschwenkt werden.

9. Handgeführter Rasenmäher gemäß dem voranstehenden Anspruch 1, **dadurch gekennzeichnet, dass** die Handführungsvorrichtung (5) eine Lenkvorrichtung (32) aufweist, die über Mittel (10, 22, 24) verfügt, welche durch eine Relativbewegung der Lenkvorrichtung (10) zur Handführungsvorrichtung (5) eine Schwenkbewegung zwischen der ersten und der zweiten Baugruppe (1, 2) um die Schwenkachse (31) bewirken.

10. Handgeführter Rasenmäher gemäß dem voranstehenden Anspruch 9, **dadurch gekennzeichnet, dass** die Lenkvorrichtung über mindestens einen Bowdenzug (22) mit der zweiten Baugruppe (2) verbunden ist und die Lenkvorrichtung (32) durch eine Lenkbewegung relativ zur Handführüngsvorrichtung (5) das Drehmoment zwischen der ersten und der zweiten Baugruppe erzeugt und über den mindesten einen Bowdenzug (22) überträgt.

11. Handgeführter Rasenmäher gemäß dem voranstehenden Anspruch 10, **dadurch gekennzeichnet, dass** die Lenkvorrichtung (32) über zwei Bowdenzüge (22) mit der zweiten Baugruppe (2) verbunden ist, wobei jeder Bowdenzug (22) die Zugkraft in eine Richtung überträgt.

12. Handgeführter Rasenmäher gemäß einem der vorangehenden Ansprüche 10 bis 11, **dadurch gekennzeichnet, dass** die Lenkvorrichtung (32) einen drehbaren Rotationskörper (24), vorzugsweise eine Scheibe, aufweist, an dem ein Ende des mindestens einen Bowdenzuges (22) befestigt ist.

13. Handgeführter Rasenmäher gemäß einem der vorangehenden Ansprüche 10 bis 11, **dadurch gekennzeichnet, dass** die Lenkvorrichtung (32) einen drehbaren Hebelarm (29) aufweist, an dem ein Ende des mindestens einen Bowdenzuges (22) befestigt ist.

14. Handgeführter Rasenmäher gemäß einem der vorangehenden Ansprüche 9 bis 13, **dadurch gekennzeichnet, dass** anstelle des mindestens einen Bowdenzuges mindestens ein Zug-/Schubgestänge mit Umlenkungen vorgesehen ist

15. Handgeführter Rasenmäher gemäß einem der vorangehenden Ansprüche 9 bis 13, **dadurch gekennzeichnet, dass** anstelle des mindestens einen Bowdenzuges ein Seilzugsystem mit Umlenkungen vorgesehen ist.

16. Handgeführter Rasenmäher gemäß einem der vorangehenden Ansprüche 1 bis 15, **dadurch gekennzeichnet, dass** die Lenkmittel so angeordnet sind, dass die Lenkbewegung und die Schwenkbewegung der zweiten Baugruppe gegenläufig verlaufen.

17. Handgeführter Rasenmäher gemäß dem voranstehenden Anspruch 16, **dadurch gekennzeichnet, dass** eine zumindest teilweise um die Lenkachse (23) drehbare Lenkvorrichtung (32) vorgesehen ist und die Lenkachse (23) zur Schwenkachse (31) in einem Winkel von 0° bis 50°, vorzugsweise 20° bis 40°, angeordnet ist.

18. Handgeführter Rasenmäher gemäß dem voranstehenden Anspruch 17, **dadurch gekennzeichnet, dass** die von der Lenkachse (23) und der Schwenkachse (31) aufgespannte Ebene vertikal verläuft.

19. Handgeführter Rasenmäher gemäß einem der vorangehenden Ansprüche 1 bis 18, **dadurch gekennzeichnet, dass** mindestens eine Arretierung (6, 7) vorgesehen ist, welche die beiden Baugruppen (1, 2) in Geradeauslaufrichtung fixieren kann.

20. Handgeführter Rasenmäher gemäß dem vorangehenden Anspruch 19, **dadurch gekennzeichnet, dass** die mindestens eine Arretierung (6, 7) federbelastet ist und automatisch beim Ausrichten der beiden Baugruppen (1, 2) einrastet.

21. Handgeführter Rasenmäher gemäß einem der vorangehenden Ansprüche 19 bis 20, **dadurch gekennzeichnet, dass** die mindestens eine Arretierung (6, 7) über einen handbetätigten Entsperrmechanismus (18) verfügt.

22. Handgeführter Rasenmäher gemäß einem der vorangehenden Ansprüche 1 bis 21, **dadurch gekennzeichnet, dass** die Abtriebsachse des Motors (15) innerhalb der Schwenklagerung (30) der Baugruppen (1, 2) angeordnet ist.

23. Handgeführter Rasenmäher gemäß einem der vorangehenden Ansprüche 1 bis 22, **dadurch gekennzeichnet, dass** die Schwenkachse (31) der Baugruppen (1, 2) und die Abtriebsachse (9) des Motors (15) koaxial angeordnet sind.

24. Handgeführter Rasenmäher gemäß einem der vorangehenden Ansprüche 1 bis 23, **dadurch gekennzeichnet, dass** die Antriebsachse des Schneidwerkzeuges innerhalb der Schwenklagerung (30) der Baugruppen (1, 2) angeordnet ist.

25. Handgeführter Rasenmäher gemäß einem der vorangehenden Ansprüche 1 bis 24, **dadurch gekennzeichnet, dass** die Schwenkachse (31) der Baugruppen (1, 2) und die Antriebsachse des Schneidwerkzeuges koaxial angeordnet sind.

## Claims

1. Hand-guided lawn mower, comprising:
1.1 a first and a second sub-assembly (1, 2), which, for the steering of the lawn mower, are mounted so as to be mutually pivotable about an upright, preferably perpendicular, swivel axis (31),
1.2 a motor having a drive shaft (9),
1.3 at least one cutting tool, which respectively rotates about a vertical axis and is driven directly or indirectly by the drive shaft (9),
1.4 a manual guidance apparatus (5), fitted to the first sub-assembly (1), for the guidance of the lawn mower by a person, wherein
1.5 the second sub-assembly (2) has at least two wheels (3), the wheel axles of which are fixed relative to the respective sub-assembly,
1.6 in the first sub-assembly (1) there is integrated the cutting tool, and - viewed from above - in the range of rotation of the cutting tool there is disposed the swivel mount for the second sub-assembly, and
1.7 the second sub-assembly possesses an articulated trolley, which, with the wheels of the second sub-assembly, swivels about the range of rotation of the cutting tool,
**characterized in that**
1.8 steering means (11, 12, 22, 24, 33) are provided, which, by a relative movement at least between parts (10) of the manual guidance apparatus (5) and the first sub-assembly (1), generate a torque between the first and the second sub-assembly (1, 2) about the swivel axis (31).

2. Hand-guided lawn mower according to the preceding Claim 1, **characterized in that** the manual guidance apparatus (5) is connected to the second sub-assembly (2) by a steering gear (11, 12), which transmits the torque between the first and the second sub-assembly.

3. Hand-guided lawn mower according to the preceding Claim 2, **characterized in that** the manual guidance apparatus (5) has a steering apparatus, in particular a handlebar (10) or a steering wheel, which applies the torque by being turned.

4. Hand-guided lawn mower according to one of the preceding Claims 2 or 3, **characterized in that** the steering gear and the swivel mount are constructed such that they are functionally combined.

5. Hand-guided lawn mower according to the preceding Claim 4, **characterized in that** the steering gear and the swivel mount have:
5.1 a first mounting ring (37), which, at least over a circular segment, possesses a toothing (35) and is connected to the second sub-assembly (2),
5.2 a second mounting ring (38) having a toothing (36), which mounting ring is arranged concentrically to the first mounting ring (37) and is connected to the first sub-assembly (1), and
5.3 a gearwheel (39), which is disposed between the two toothings (35, 36) and engages in these toothings and is mounted on an axle (40) which is fastened perpendicularly on a rotatable intermediate ring (41).

6. Hand-guided lawn mower according to the preceding Claim 5, **characterized in that** the intermediate ring (41) is controlled by a steering linkage (33).

7. Hand-guided lawn mower according to one of the preceding Claims 1 to 3, **characterized in that** the manual guidance apparatus (5), at its end facing the lawn mower, is provided with a toothing (11), which engages in a toothing (12) disposed on the second sub-assembly (2), and the two sub-assemblies (1, 2) are mutually swivelled by turning of at least one part (10) of the manual guidance apparatus (5).

8. Hand-guided lawn mower according to the preceding Claim 2, **characterized in that** the manual guidance apparatus (5), at its end facing the lawn mower, is provided with a toothing (11), which engages in a toothing (12) fastened to the second sub-assembly (2), and the two sub-assemblies (1, 2) are mutually swivelled by lateral swivelling of the manual guidance apparatus (5) relative to the first sub-assembly (1).

9. Hand-guided lawn mower according to the preceding Claim 1, **characterized in that** the manual guidance apparatus (5) has a steering apparatus (32), boasts means (10, 22, 24) which, by a relative movement of the steering apparatus (10) with respect to the manual guidance apparatus (5), produce a swivel movement between the first and the second sub-assembly (1, 2) about the swivel axis (31).

10. Hand-guided lawn mower according to the preceding Claim 9, **characterized in that** the steering apparatus is connected to the second sub-assembly (2) by at least one Bowden cable (22), and the steering apparatus (32), by a steering movement relative to the manual guidance apparatus (5), generates the torque between the first and the second sub-assembly and transmits the said torque via the at least one Bowden cable (22).

11. Hand-guided lawn mower according to the preceding Claim 10, **characterized in that** the steering apparatus (32) is connected to the second sub-assembly (2) by two Bowden cables (22), each Bowden cable (22) transmitting the tensile force in one direction.

12. Hand-guided lawn mower according to one of the preceding Claims 10 to 11, **characterized in that** the steering apparatus (32) has a rotatable rotation body (24), preferably a disc, to which one end of the at least one Bowden cable (22) is fastened.

13. Hand-guided lawn mower according to one of the preceding Claims 10 to 11, **characterized in that** the steering apparatus (32) has a rotatable lever arm (29), to which one end of the at least one Bowden cable (22) is fastened.

14. Hand-guided lawn mower according to one of the preceding Claims 9 to 13, **characterized in that**, in place of the at least one Bowden cable, at least one pull/push linkage with changes of direction is provided.

15. Hand-guided lawn mower according to one of the preceding Claims 9 to 13, **characterized in that**, in place of the at least one Bowden cable, a cable control system with changes of direction is provided.

16. Hand-guided lawn mower according to one of the preceding Claims 1 to 15, **characterized in that** the steering means are arranged such that the steering movement and the swivel movement of the second sub-assembly are oppositely directed.

17. Hand-guided lawn mower according to the preceding Claim 16, **characterized in that** a steering apparatus (32) which is rotatable at least partially about the steering axle (23) is provided, and the steering axle (23) is arranged at an angle of 0° to 50°, preferably 20° to 40°, to the swivel axis (31).

18. Hand-guided lawn mower according to the preceding Claim 17, **characterized in that** the plane spanned by the steering axle (23) and the swivel axis (31) runs vertically.

19. Hand-guided lawn mower according to one of the preceding Claims 1 to 18, **characterized in that** at least one locking device (6, 7) is provided, which can fix the two sub-assemblies (1, 2) in a straight-line direction.

20. Hand-guided lawn mower according to the preceding Claim 19, **characterized in that** the at least one locking device (6, 7) is springloaded and automatically engages when the two sub-assemblies (1, 2) are aligned.

21. Hand-guided lawn mower according to one of the preceding Claims 19 to 20, **characterized in that** the at least one locking device (6, 7) boasts a manually operated unlocking mechanism (18).

22. Hand-guided lawn mower according to one of the preceding Claims 1 to 21, **characterized in that** the output axle of the motor (15) is disposed within the swivel mount (30) of the sub-assemblies (1, 2).

23. Hand-guided lawn mower according to one of the preceding Claims 1 to 22, **characterized in that** the swivel axis (31) of the sub-assemblies (1, 2) and the output axle (9) of the motor (15) are arranged coaxially.

24. Hand-guided lawn mower according to one of the preceding Claims 1 to 23, **characterized in that** the drive axle of the cutting tool is disposed within the swivel mount (30) of the sub-assemblies (1, 2).

25. Hand-guided lawn mower according to one of the preceding Claims 1 to 24, **characterized in that** the swivel axis (31) of the sub-assemblies (1, 2) and the drive axle of the cutting tool are arranged coaxially.

## Revendications

1. Tondeuse à gazon manuelle, comprenant :
1.1.un premier et un deuxième module (1, 2), qui sont montés de manière à pouvoir pivoter l'un par rapport à l'autre autour d'un axe de pivotement (31) droit, de préférence vertical, pour guider la tondeuse à gazon,
1.2.un moteur avec un arbre d'entraînement (9),
1.3.au moins un outil de coupe tournant à chaque fois autour d'un axe vertical, qui est entraîné par l'arbre d'entraînement (9) directement ou indirectement, et
1.4.un dispositif de guidage manuel (5) pour le guidage de la tondeuse à gazon par une personne, lequel est monté sur le premier module (1),
1.5.le deuxième module (2) présentant au moins deux roues (3) dont les essieux sont fixés par rapport à chaque module,
1.6.l'outil de coupe étant intégré dans le premier module (1) et - vu de dessus - le support pivotant pour le deuxième module étant disposé dans la plage de rotation de l'outil de coupe, et
1.7.le deuxième module possédant un élément remorqué, qui pivote avec les roues du deuxième module autour de la plage de rotation de l'outil de coupe,
**caractérisée en ce que**
1.8.des moyens de direction (11, 12, 22, 24, 33) sont prévus, lesquels produisent, par un mouvement relatif au moins entre les pièces (10) du dispositif de guidage manuel (5) et le premier module (1), un couple entre le premier et le deuxième module (1, 2) autour de l'axe de pivotement (31).

2. Tondeuse à gazon manuelle selon la revendication précédente 1, **caractérisée en ce que** le dispositif de guidage manuel (5) est connecté par le biais d'un mécanisme de direction (11, 12) au deuxième module (2), qui transfère le couple entre le premier et le deuxième module.

3. Tondeuse à gazon manuelle selon la revendication précédente 2, **caractérisée en ce que** le dispositif de guidage manuel (5) présente un dispositif de direction, notamment une barre de direction (10) ou un volant de direction, qui introduit le couple par rotation.

4. Tondeuse à gazon manuelle selon l'une quelconque des revendications précédentes 2 ou 3, **caractérisée en ce que** le mécanisme de direction et le support pivotant sont réalisés de manière combinée fonctionnellement l'un à l'autre.

5. Tondeuse à gazon manuelle selon la revendication précédente 4, **caractérisée en ce que** le mécanisme de direction et le support pivotant présentent :
5.1.un premier anneau de support (37) qui possède au moins sur un segment de cercle une denture (35) et qui est connecté au deuxième module (2),
5.2.un deuxième anneau de support (38) avec une denture (56) qui est disposé concentriquement au premier anneau de support (37) et qui est connecté au premier module (1), et
5.3.une roue dentée (39) disposée entre les deux dentures (35, 36) et venant en prise dans ces dentures, qui est montée sur un axe (40) qui est fixé verticalement sur un anneau intermédiaire rotatif (41).

6. Tondeuse à gazon manuelle selon la revendication précédente 5, **caractérisée en ce que** l'anneau intermédiaire (41) est commandé par une tringle de direction (33).

7. Tondeuse à gazon manuelle selon l'une quelconque des revendications précédentes 1 à 3, **caractérisée en ce que** le dispositif de guidage manuel (5) est pourvu, à l'extrémité tournée vers la tondeuse à gazon, d'une denture (11) qui vient en prise dans une denture (12) disposée dans le deuxième module (2), et **en ce que** par la rotation d'au moins une partie (10) du dispositif de guidage manuel (5), les deux modules (1, 2) sont pivotés l'un par rapport à l'autre.

8. Tondeuse à gazon manuelle selon la revendication précédente 2, **caractérisée en ce que** le dispositif de guidage manuel (5) est pourvu, à l'extrémité tournée vers la tondeuse à gazon, d'une denture (11) qui vient en prise dans une denture (12) fixée au deuxième module (2) et **en ce que** par pivotement latéral du dispositif de guidage manuel (5) par rapport au premier module (1), les deux modules (1, 2) sont pivotés l'un par rapport à l'autre.

9. Tondeuse à gazon manuelle selon la revendication précédente 1, **caractérisée en ce que** le dispositif de guidage manuel (5) présente un dispositif de direction (32) qui dispose de moyens (10, 22, 24) qui, par un mouvement relatif du dispositif de direction (10) par rapport au dispositif de guidage manuel (5), provoquent un mouvement de pivotement entre le premier et le deuxième module (1, 2) autour de l'axe de pivotement (31).

10. Tondeuse à gazon manuelle selon la revendication précédente 9, **caractérisée en ce que** le dispositif de direction est connecté par le biais d'au moins un câble Bowden (22) au deuxième module (2) et le dispositif de direction (32) produit, par un mouvement de direction par rapport au dispositif de guidage manuel (5), le couple entre le premier et le deuxième module, et le transfère par le biais de l'au moins un câble Bowden (22).

11. Tondeuse à gazon manuelle selon la revendication précédente 10, **caractérisée en ce que** le dispositif de direction (32) est connecté par le biais de deux câbles Bowden (22) au deuxième module (2), chaque câble Bowden (22) transmettant la force de traction dans une direction.

12. Tondeuse à gazon manuelle selon l'une quelconque des revendications précédentes 10 ou 11, **caractérisée en ce que** le dispositif de direction (32) présente un corps de révolution rotatif (24), de préférence un disque, sur lequel est fixée une extrémité de l'au moins un câble Bowden (22).

13. Tondeuse à gazon manuelle selon l'une quelconque des revendications précédentes 10 ou 11, **caractérisée en ce que** le dispositif de direction (32) présente un bras de levier rotatif (29) sur lequel est fixée une extrémité de l'au moins un câble Bowden (22).

14. Tondeuse à gazon manuelle selon l'une quelconque des revendications précédentes 9 à 13, **caractérisée en ce que** l'on prévoit au lieu de l'au moins un câble Bowden, au moins une tringle de traction/poussée avec des poulies de renvoi.

15. Tondeuse à gazon manuelle selon l'une quelconque des revendications précédentes 9 à 13, **caractérisée en ce que** l'on prévoit, au lieu de l'au moins un câble Bowden, un système de câble de traction avec des poulies de renvoi.

16. Tondeuse à gazon manuelle selon l'une quelconque des revendications précédentes 1 à 15, **caractérisée en ce que** les moyens de direction sont disposés de telle sorte que le mouvement de direction et le mouvement de pivotement du deuxième module soient en sens inverse.

17. Tondeuse à gazon manuelle selon la revendication précédente 16, **caractérisée en ce que** l'on prévoit un dispositif de direction (32) pouvant tourner au moins en partie autour de l'axe de direction (23), et l'axe de direction (23) est disposé par rapport à l'axe de pivotement (31) suivant un angle de 0° à 50°, de préférence de 20° à 40°.

18. Tondeuse à gazon manuelle selon la revendication précédente 17, **caractérisée en ce que** le plan tendu par l'axe de direction (23) et l'axe de pivotement (31) s'étend verticalement.

19. Tondeuse à gazon manuelle selon l'une quelconque des revendications précédentes 1 à 18, **caractérisée en ce que** l'on prévoit au moins un blocage (6, 7) qui peut fixer les deux modules (1, 2) dans la direction rectiligne.

20. Tondeuse à gazon manuelle selon la revendication précédente 19, **caractérisée en ce que** l'au moins un blocage (6, 7) est sollicité par ressort et s'encliquète automatiquement lors de l'orientation des deux modules (1, 2).

21. Tondeuse à gazon manuelle selon l'une quelconque des revendications précédentes 19 ou 20, **caractérisée en ce que** l'au moins un blocage (6, 7) dispose d'un mécanisme de déverrouillage (18) manuel.

22. Tondeuse à gazon manuelle selon l'une quelconque des revendications précédentes 1 à 21, **caractérisée en ce que** l'axe de sortie du moteur (15) est disposé à l'intérieur du support pivotant (30) des modules (1, 2).

23. Tondeuse à gazon manuelle selon l'une quelconque des revendications précédentes 1 à 22, **caractérisée en ce que** l'axe de pivotement (31) des modules (1, 2) et l'axe de sortie (9) du moteur (15) sont disposés coaxialement.

24. Tondeuse à gazon manuelle selon l'une quelconque des revendications précédentes 1 à 23, **caractérisée en ce que** l'axe d'entraînement de l'outil de coupe est disposé à l'intérieur du support pivotant (30) des modules (1, 2).

25. Tondeuse à gazon manuelle selon l'une quelconque des revendications précédentes 1 à 24, **caractérisée en ce que** l'axe de pivotement (31) des modules (1, 2) et l'axe d'entraînement de l'outil de coupe sont disposés coaxialement.
